# EUROPÄISCHE PATENTSCHRIFT

(11) **EP 2 243 666 B1**
(45) Veröffentlichungstag und Bekanntmachung des Hinweises auf die Patenterteilung: **07.08.2013**
(21) Anmeldenummer: 10157480.4
(22) Anmeldetag: 24.03.2010
(51) Int. Cl.: B60R 1/12, B60Q 1/26

(54) **Minimaler LED Blinker Im Außenspiegel**
Minimal LED indicator in external mirror
Clignotant DEL minimal dans le rétroviseur extérieur

(30) Priorität: 20.04.2009 DE 102009019092
(43) Veröffentlichungstag der Anmeldung: 27.10.2010
(73) Patentinhaber: SMR Patents S.à.r.l., 1653 Luxembourg (LU)
(72) Erfinder: Schmierer, Arne, 73230, Kirchheim (DE)
(74) Vertreter: Weber-Bruls, Dorothée

(56) Entgegenhaltungen:
- EP-A2- 1 120 312
- WO-A1-2004/050428
- DE-A1-102004 025 369
- DE-U1- 29 924 584
- GB-A- 2 161 440
- GB-A- 2 278 584
- JP-A- 60 047 739
- US-A- 5 669 699
- US-A1- 2008 316 054

## Beschreibung

Die Erfindung betrifft einen Außenspiegel für Fahrzeuge mit den Merkmalen des Oberbegriffs des Anspruchs 1.

### Stand der Technik

Konventionelle Außenspiegel haben ein Design, das es erlaubt, den Spiegelkopf gegenüber dem Spiegelfuß von Hand oder motorisch in Fahrtrichtung des Fahrzeuges nach hinten abzuklappen. Zudem lässt sich der Spiegelglasträger im Spiegelkopf in der Regel vom Inneren des Fahrzeuges aus einstellen. Dadurch ist eine einwandfreie Sicht des Fahrers gewährleistet, wodurch eine hohe Verkehrssicherheit erreicht wird. Viele Außenspiegel weisen eine Blinkleuchte auf, die an der in Fahrtrichtung vorderen Seite des Spiegelgehäuses vorgesehen ist. Für neben oder hinter dem Außenspiegel befindliche Verkehrsteilnehmer ist die Blinkleuchte jedoch nicht oder nur ungenügend erkennbar. Daher werden Zusatz- LEDs verwenden, die entgegen der Fahrtrichtung abstrahlen und am äußersten Rand des Außenspiegels im Blinker integriert sind,

Nach den ECE Regeln soll ein Zusatzblinklicht im Außenspiegel einen Bereich beginnend bei 5° von der Fahrzeuglängsachse bis zu 60° zur Fahrzeuglängsachse in Fahrtgegenrichtung ausleuchten.

Aus dem Stand der Technik ist einen Vielzahl an Lösungen für Blinker im Außenspiegel bekannt. Dabei werden Blinkermodule in das Gehäuse eines Außenspiegels integriert. Diese Blinkermodule enthalten je nach Design Lichtwellenleiter, Reflektoren, Leiterplatten, Linsen und Abdeckscheiben und Leuchtmittel. Die Leuchtmittel sind durch die bekannten Vorteile immer mehr LEDs.

Aus US 5,669,699 A ist ein gattungsgemäßer Außenspiegel bekannt.

Aus der EP 1120312 ist eine Außenspiegel mit Blinker bekannt, der ein Leuchtenmodul aufweist, indem einen Vielzahl von LEDs durch Öffnungen eines Reflektors scheinen. Die LED, die sich am äußersten Rand des Außenspiegels befindet hat eine Abstrahlrichtung, die den gesetzlichen Regelungen entspricht. Die Strahlformung wird über den Reflektor erzielt. Das gesamte Blinkermodul wird in das Gehäuse des Außenspiegels verklipst und über eine Steckverbindung elektrisch kontaktiert. Der Aufbau des Blinkermoduls ist aufwendig und teuer.

Aus der DE 102004025369 ist eine weitere Lösung bekannt. Im Versuch die Blinkermodule zu minieren schlägt diese Druckschrift ein kleines Blinkermodul vor, das austauschbar an der Peripherie des Außenspiegels angebracht ist. Gehalten wird das Modul in einem Anbauteil, das mit dem Spiegelträger verbunden ist.

Weiterhin sind aus dem Stand der Technik Indikatoren als Warnanzeigen für Fahrerassistenzsystem bekannt.

Die US20080316054 zeigt dabei vorgefertigte Module, die versehen mit Lichtfenstern, Leiterplatten und einem abgeschlossenen Gehäuse im Außenspiegel eingesetzt werden. Die Lichtfenster schließen dabei mit der Kontur des Außenspiegels bündig ab.

Der Erfindung liegt die Aufgabe zugrunde, einen Außenspiegel so auszubilden, dass die von der Blinkleuchte ausgesandten Strahlen einwandfrei erkennbar sind, ohne großen Aufwand bei der Ausgestaltung des Blinkermoduls zu machen.

Die Blinkleuchte des erfindungsgemäßen Außenspiegels strahlt das Licht über einen großen Winkelbereich schräg nach hinten ab, so dass die neben oder hinter dem Außenspiegel befindlichen Verkehrsteilnehmer zuverlässig und deutlich die Absicht des Fahrers, nach rechts oder links abzubiegen, erkennen können. Dadurch wird eine hohe Verkehrssicherheit gewährleistet. Gleichzeitig wird diese Ausleuchtung durch eine einzelne LED ohne aufwendige Lichtmodule erreicht.

Der erfindungsgemäße Außenspiegel weist angepasste Aufnahmen auf, in die ein Minimalblinkereinsatz eingebracht wird. Der Minimalblinker besteht dabei aus einer LED die in geeigneterweise umspritzt ist und dann in die Aufnahme eingepasst wird. Der Vorteil liegt in der Einsparung von Material und Bauteilen sowie einer hohen Flexibilität in der Gestaltung des Außenspiegels.

Der weitere Vorteil liegt in einer Standardisierung des Minimalblinkers.

Weitere Vorteile und Merkmale der Erfindung ergeben sich aus den Ansprüchen, der Beschreibung und der Zeichnung.

### Beschreibung der Erfindung

Figur 1 zeigt einen Außenspiegel als Beispiel.
Figur 2 ein Beispiel aus dem Stand der Technik.
Figur 3 die erfindungsgemäße Lösung.
Figur 4 zeigt eine weitere Ausführungsform
Figur 5 zeigt eine vollständig umspritze LED
Figur 6 zeigt einen weitere Ausführungsform
Figur 7 Außenspiegel mit mehreren LEDs

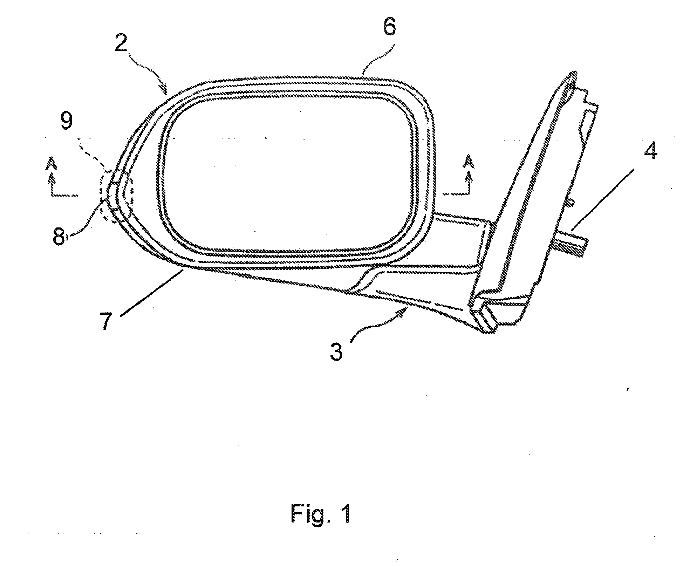

In Figur 1 ist ein Außenspiegel 1 dargestellt, der aus einen Spiegelkopf 2 und einem Spiegelfuß 3 besteht. Mit dem Spiegelfuß 3 ist der Außenspiegel 1 an einem Fahrzeug befestigt. Die Befestigungsplatte 4 wird dabei mit dem Fahrzeug verschraubt. Ein solcher Außenspiegel 1 weist ein reflektierendes Element 5 auf, das in eine Öffnung 8 des Spiegelgehäuses 6 eingepasst ist. Das reflektierende Element 5 wird von einem Spiegelrahmen 7 umfasst. In diesen Spiegelrahmen 7 ist eine Öffnung 8 vorgesehen, in die ein Blinker 9 eingebaut ist.

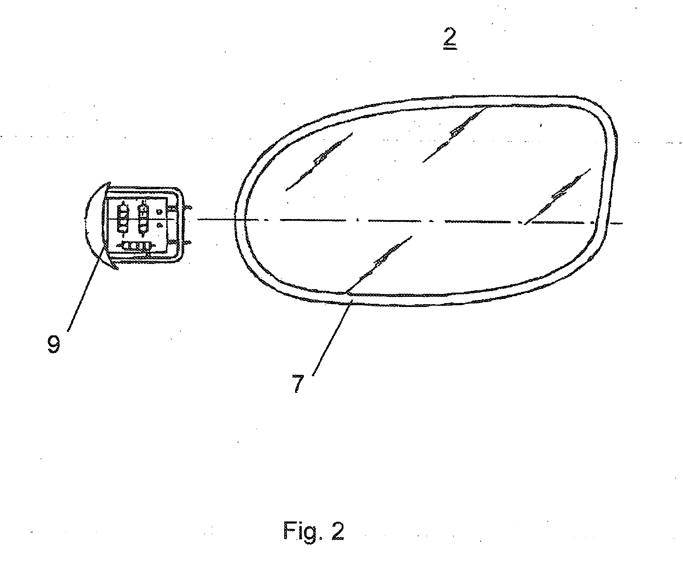

In Figur 2 ist beispielhaft eine Ausführung aus dem Stand der Technik beschrieben. Dabei wird ein Blinker 9 in den Spiegelrahmen 7 eines Außenspiegels 1 eingefügt. Der Blinker 9 ist in diesem Ausführungsbeispiel als separates Modul ausgebildet, so dass er auf einfache Art und Weise ein- und ausgebaut werden kann.

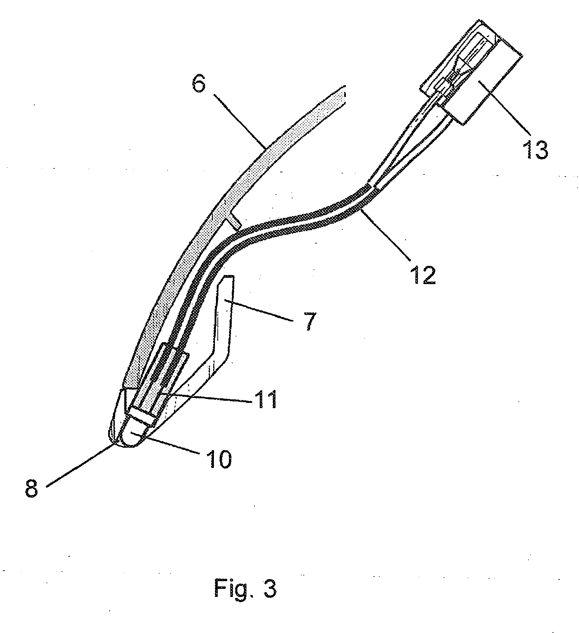

Die erfindungsgemäße Lösung ist in Figur 3 als Längsschnitt durch den Außensppiegel 1 entlang der Achse A-A der Figur 1 dargestellt. Der Ausschnitt in Figur 3 zeigt einen Bereich des Spiegelgehäuses 6, an dem der Spiegelrahmen 7 angebracht ist. Im Spiegelrahmen 7 befindet sich eine kreisförmige Öffnung 8. In diese Öffnung 8 ragt eine LED 10 mit ihrem Kunststoffdom hinein. Die Anschlüsse der LED zum Kabel 12 werden gelötete und anschließend umgossen oder umspritzt und bilden einen wasserdichten Kontaktkörper 11, der zur Installation der LED 10 im Außenspiegel 1 dient.

Dieser Kontaktkörper 11 stellt nicht nur den Kontakt zwischen Kabel 12 und LED 10 her und dichtet den elektrischen Kontakt gegen Feuchtigkeit ab, sondern dient auch als Montageelement zum Einbau im Außenspiegel 1 und schützt die LED 10 von den Auswirkungen von Vibrationen. Das kurze Kabel 12 endet in einem Flachstecker 13. Der Aufbau des Außenspiegels 1 mit seinem Spiegelrahmen 7 ist so gewählt, dass der Kontaktkörper 11 der LED 10 mit den Gehäusewänden des Außenspiegels 1 verkeilt wird. Die LED 10 mit ihrem angespritzten Kontaktkörper 11 wird in diesem Beispiel zwischen den Wänden des Spiegelgehäuses 6 und des Spiegelrahmens 7 eingepresst. Die Bauform der beiden Bauelemente ist so gewählt, dass der Kontaktkörper 11 bei der Installation der LED 10 positionssicher verklemmt wird.

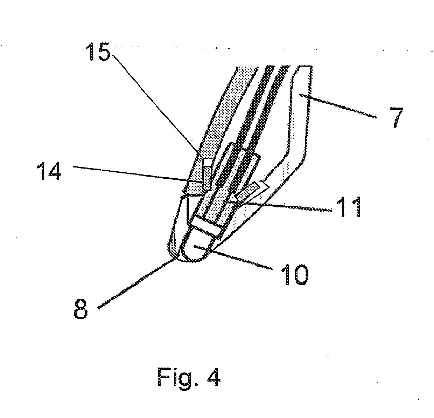

In einer anderen Ausführungsform wird der Kontaktkörper 11 als ein Teil einer Klips-Verbindung gespritzt oder gegossen. Figur 4 zeigt eine mögliche Ausführungsform. Der Kontaktkörper 11 weist Laschen 14 auf, die an ihn angespritzt sind. Das Spiegelgehäuse 6 und der Spiegelrahmen 7 haben jeweils Rastaussparungen 15. Der Kontaktkörper 11 wird bei der Montage zwischen Spiegelrahmen 7 und -gehäuse 6 geschoben. Dabei legen sich die Laschen 14 an den Kontaktkörper 11 an. In der Rastposition spreizen sich die elastischen Laschen 14 ab und verhaken sich in der Sollposition.

In einer weiteren Ausführungsform wird der Kontaktkörper 11 in das Spiegelgehäuse 6 eingelegt, das dafür eine Aufnahme beispielsweise in Form von Rippen aufweist. Anschließend wird der Spiegelrahmen 7 aufgesteckt und fixiert damit den Kontaktkörper 11 mit der LED 10.

Der Kontaktkörper 11 wird in passender Form hergestellt beispielsweise als zylindrischer Körper oder als Quader. Wenn eine Klipsverbindung angestrebt ist, wird der Kontaktkörper 11 mit einer Vorrichtung zum Verbinden mit dem Außenspiegel 1 , an beliebigen Positionen des Spiegelgehäuses 6, des Spiegelfußes 3 und seiner Abdeckung, des Spiegelrahmens , in einem Stück hergestellt. Das Herstellungsverfahren spielt keine Rolle für die Erfindung. Der Kontaktkörper 11 kann gespritzt oder gegossen werden.

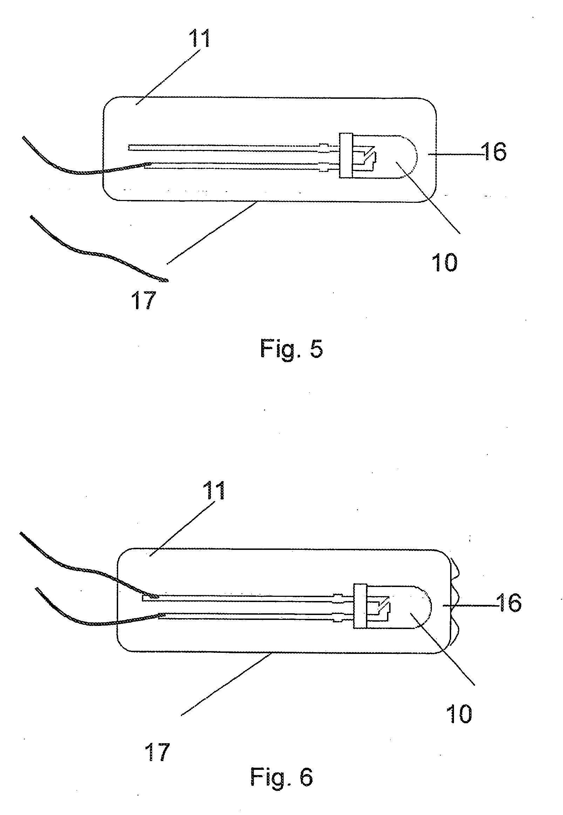

Eine weitere Ausführungsform der Erfindung ist in den Figuren 5 und 6 gezeigt. Die LED 10 wird in dieser Ausführung komplett mit Kunststoff umspritzt. Das erhöht den Schutz der LED 10 und reduziert eventuell auftretende Probleme mit der Kontaktselle zwischen der LED 10 und dem Kontaktkörper 11. Der Kontaktkörper 11 erstreckt sich mindestens über die Länge der LED 10 und überdeckt die Löt-Verbindung mit den Kabeln 12 und deckt auch den bereits vorhandenen Kunststoffdom der LED 10 ab. Dabei können Befestigungsstrukturen entlang der Längsflächen 17 angebracht werden, wie laschen, Nasen, Schnappverbindungen usw.

Ein weiterer Vorteil der Komplettumspritzung ist, dass die Stirnfläche 16 des Kontaktkörpers 11 strukturierte hergestellt wird. Über integrierte Oberflächenstrukturen wie Wellen, Prismen, Riefen oder Fresnellinsen -Strukturen lässt sich die optische Abstrahlcharakteristik bestimmen.

Ein Vorteil der Erfindung ist, dass der Spiegelkopf 2 kein Lichtfenster für den Blinker benötigt. Im Stand der Technik sind Blinker von transparenten Lichtfenster gegen die Außenwelt geschützt eingebaut. Ob in modularere Form oder als fester Einbau im Außenspiegel 1, die Blinker weisen ein Lichtfenster in Form einer transparenten Abdeckscheibe auf, die als Wetterschutz dient und in manchen Ausführungen als Lichtleiter fungiert.

Die erfindungsgemäße Lösung weist dagegen nur Öffnungen 8 im Spiegelgehäuse auf, an den Stellen, an denen Licht abgestrahlt werden soll.

Die Erfindung verwendet den Kunststoffdom der LED 10 als Lichtfenster. Die LED 10 besteht aus einer Leiterplatte mit Halbleiterchip der mit Kunststoff umspritzt ist. Der Kunststoffdom dient zum Schutz der elektrischen Bauteile sowie zur Strahldefinition. Der Kunststoffdome ragt direkt in eine Öffnung 8 in der Spiegelverkleidung. Dabei dichtet der Kunststoffdom der LED 10 die Öffnung 8 nicht ab. Für einen einfache Montage ist die Öffnung 8 in der Spiegelverkleidung etwas größer als der Kunststoffdom der LED.

Zur Ausleuchtung des vorgeschrieben Bereichs werden elliptische LEDs 10, deren Ausstrahlungscharakteristik eine elliptische Form hat, eingesetzt. Ein Beispiel für dien Ausführungsform ist die Verwendung einer LED GLI ATL5/9-Y für einen Blinker, die ohne weiteren Maßnahmen das gesetzlich vorgeschriebene Feld ausleuchtet.

In der alternativen Ausführungsform ragt die Stirnfläche des Kontaktkörpers 11 direkt in die Öffnung im Spiegelkopf und bildet mit der Oberflächenstruktur die gewünschte Abstrahlcharakteristik aus. Auch hier dichtet die Stirnfläche die Öffnung 8 in der Spiegelverkleidung nicht ab.

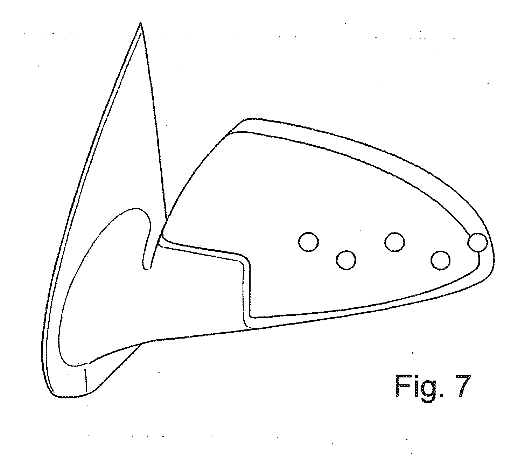

Die Erfindung ist dabei nicht auf den Einsatz einer einzelnen Minimal -LED 10 an der Spiegelaußenseite begrenzt. In Figur 7 wird beispielhaft einen Lösung skizziert. Mehrere Öffnungen sind im Spiegelgehäuse vorgesehen, wobei in diesem Beispiel eine alternierende Struktur gewählt wird. Es ist jede Form und jedes Design denkbar. Die Öffnungen für die LEDs sind im Spiegelgehäuse oder im Spiegelfuß vorhanden.

Die Erfindung ist weiterhin nicht auf den Einsatz als Blinker begrenzt.

Wird einen schwächere LED verwendet, kann mit der erfindungsgemäßen Lösung des Kontaktkörpers eine Warnanzeige im Spiegelgehäuse oder Spiegelfuß geschaffen werden. Das Spiegelgehäuse oder der Spiegelfuß weist eine oder mehrere Öffnungen zur Aufnahme einer LED auf.

Die LED, die als Warnsignal beispielsweise bei Annäherung eines Fahrzeugs im toten Winkel dient, wird in die Öffnung gesteckt. Diese Ausführungsform der Warnanzeige hat den Vorteil, dass nur ein Spiegeltyp hergestellt werden muss und die kleinen LEDs nur dann installiert wird, wenn es die Ausstattung mit einem Tot-Winkel Erfassungssystem erfordert. Wählt man LED mit geringer Größe, sind auch die vorgehaltenen Öffnungen im Außenspiegel nicht groß und fallen auch nicht auf, wenn sie nicht mit den LEDs bestückt sind.

Mann kann aus einer regelmäßigen Anordnung von Öffnungen aus gestalterisch Vorteile ziehen. Die LEDs können unterschiedliche Farbe haben, um beispielsweise eine zunehmend kritische Gefahrensituation über die Farbe wiederzugeben.

## Patentansprüche

1. Außenspiegel (1) bestehend aus einem Spiegelkopf (2) sowie einem Spiegelfuß (3) und den dazu gehörigen Verkleidungen aus Spiegelgehäuse (6), Spiegelrahmen (7) und Spiegelfußabdeckung, der mindestens eine Öffnung (8) für das Einbringen einer LED (10) aufweist, **dadurch gekennzeichnet, dass** Spiegelgehäuse (6) und/oder Spiegelrahmen (7) und/ oder Spiegelfußabdeckung mindestens eine Aufnahme bilden, in die jeweils ein Kontaktkörper (11) eingepasst ist, wobei die LED (10) in die Öffnung (8) des Spiegelgehäuse (6) und/oder Spiegelrahmen (7) und/ oder Spiegelfußabdeckung ragt,
und dass der Kontaktkörper (11) durch Umspritzen oder Umgießen mindestens der Kontakte der LED (10) und des Kabels (12) hergestellt ist.

2. Außenspiegel (1) nach Anspruch 1, **dadurch gekennzeichnet, dass** der Kontaktkörper (11) durch Umspritzen oder Umgießen der Kontakte der LED (10), des Kabels (12) und des Kunststoffdoms der LED (10) hergestellt ist.

3. Außenspiegel (1) nach Anspruch 1, **dadurch gekennzeichnet, dass** die Öffnung (8) im Außenspiegel (1) von dem Kunststoffdom der LED (10) nach außen ausgefüllt ist.

4. Außenspiegel (1) nach Anspruch 1, **dadurch gekennzeichnet, dass** die Öffnung (8) im Außenspiegel (1) von der Stirnfläche des Kontaktkörpers (11) nach außen ausgefüllt ist.

5. Außenspiegel (1) nach einem der vorherigen Ansprüche, **dadurch gekennzeichnet, dass** die Öffnung (8) keine Lichtscheibe aufweist.

6. Außenspiegel (1) nach Anspruch 1, **dadurch gekennzeichnet, dass** die Größe des Kontaktkörpers (11) an die Aufnahme zwischen Spiegelgehäuse (6) und Spiegelrand angepasst ist.

7. Außenspiegel (1) nach Anspruch 1, **dadurch gekennzeichnet, dass** die Aufnahme Führungselemente zur Positionierung des Kontaktkörpers (11) aufweist.

8. Außenspiegel (1) nach Anspruch 1, **dadurch gekennzeichnet, dass** die Aufnahme mindestens ein Bauteil für Herstellung einer Klips-Verbindung aufweist.

9. Außenspiegel (1) nach Anspruch 1, **dadurch gekennzeichnet, dass** die Aufnahme mindestens einen Rastaussparung aufweist.

10. Außenspiegel (1) nach Anspruch 1, **dadurch gekennzeichnet, dass** der Kontaktkörper (11) zylindrisch ist.

11. Außenspiegel (1) nach Anspruch 1, **dadurch gekennzeichnet, dass** der Kontaktkörper (11) quaderförmig ist.

12. Außenspiegel (1) nach Anspruch 1, **dadurch gekennzeichnet, dass** der Kontaktkörper (11) Laschen als Teil einer Klips-Verbindung aufweist.

13. Außenspiegel (1) nach Anspruch 1 **dadurch gekennzeichnet, dass** die mindestens eine LED (10) als Blinker (9) eingesetzt ist.

14. Außenspiegel (1) nach Anspruch 1 **dadurch gekennzeichnet, dass** die mindestens eine LED (10) als Warnanzeige für einen Fahrerassistenzsystem eingesetzt ist.

## Claims

1. An external mirror (1) comprising a mirror head (2) as well as a mirror foot (3) and the associated fairings made up of a mirror housing (6), a mirror frame (7) and a mirror foot cover, which has at least one opening (8) for placing an LED (10), **characterized in that**
the mirror housing (6) and/or the mirror frame (7) and/or the mirror foot cover form at least one seat, into which one contact body (11) is fitted, respectively, wherein the LED (10) projects into the opening (8) of the mirror housing (6) and/or the mirror frame (7) and/or the mirror foot cover,
and that the contact body (11) is made by extrusion-coating or casting of at least the contacts of the LED (10) and the cable (12).

2. The external mirror (1) according to claim 1, **characterized in that** the contact body (11) is made by extrusion-coating or casting of the contacts of the LED (10), the cable (12) and the plastic dome of the LED (10).

3. The external mirror (1) according to claim 1, **characterized in that** the opening (8) in the external mirror (1) is outwardly filled out by the plastic dome of the LED (10).

4. The external mirror (1) according to claim 1, **characterized in that** the opening (8) in the external mirror (1) is outwardly filled out by the face of the contact body (11).

5. The external mirror (1) according to any one of the preceding claims, **characterized in that**
the opening (8) has no lens.

6. The external mirror (1) according to claim 1, **characterized in that** the size of the contact body (11) is adjusted to the seat between the mirror housing (6) and the mirror edge.

7. The external mirror (1) according to claim 1, **characterized in that** the seat has guide elements for positioning the contact body (11).

8. The external mirror (1) according to claim 1, **characterized in that** the seat has at least one component for establishing a clip connection.

9. The external mirror (1) according to claim 1, **characterized in that** the seat has at least one snap-in recess.

10. The external mirror (1) according to claim 1, **characterized in that** the contact body (11) is cylindrical.

11. The external mirror (1) according to claim 1, **characterized in that** the contact body (11) is cuboid-shaped.

12. The external mirror (1) according to claim 1, **characterized in that** the contact body (11) has clips as parts of a clip connection.

13. The external mirror (1) according to claim 1, **characterized in that** the at least one LED (10) is used as an indicator (9).

14. The external mirror (1) according to claim 1, **characterized in that** the at least one LED (10) is used as a warning indicator for a driver assistance system.

## Revendications

1. Rétroviseur extérieur (1) comportant une tête de rétroviseur (2) ainsi qu'un pied de rétroviseur (3), et les habillages associés constitués d'un boîtier de rétroviseur (6), d'un cadre de rétroviseur (7) et d'un recouvrement de pied de rétroviseur, présentant au moins une ouverture (8) pour l'introduction d'une diode électroluminescente (DEL) (10), **caractérisé en ce que**
le boîtier de rétroviseur (6) et/ou le cadre de rétroviseur (7) et/ou le recouvrement de pied de rétroviseur constituent au moins un logement dans lequel est monté un corps de contact (11), respectivement, de sorte que la DEL (10) fait saillie dans l'ouverture (8) du boîtier de rétroviseur (6) et/ou du cadre de rétroviseur (7) et/ou du recouvrement de pied de rétroviseur,
et **en ce que** le corps de contact (11) est produit par moulage par injection ou coulée autour au moins des contacts de la DEL (10) et du câble (12).

2. Rétroviseur extérieur (1) selon la revendication 1, **caractérisé en ce que** le corps de contact (11) est produit par moulage par injection ou coulée autour des contacts de la DEL (10), du câble (12), et du dôme en matière plastique de DEL (10).

3. Rétroviseur extérieur (1) selon la revendication 1, **caractérisé en ce que** l'ouverture (8) dans le rétroviseur extérieur (1) est remplie du dôme en matière plastique de la DEL (10) dans une direction vers l'extérieur.

4. Rétroviseur extérieur (1) selon la revendication 1, **caractérisé en ce que** l'ouverture (8) dans le rétroviseur extérieur (1) est remplie de la face avant du corps de contact (11) dans une direction vers l'extérieur.

5. Rétroviseur extérieur (1) selon l'une quelconques des revendications précédentes, **caractérisé en ce que**
l'ouverture (8) n'a pas de lentille.

6. Rétroviseur extérieur (1) selon la revendication 1, **caractérisé en ce que** la taille du corps de contact (11) est adaptée au logement situé entre le boîtier de rétroviseur (6) et le bord de rétroviseur.

7. Rétroviseur extérieur (1) selon la revendication 1, **caractérisé en ce que** le logement comporte des éléments de guidage pour le positionnement du corps de contact (11)

8. Rétroviseur extérieur (1) selon la revendication 1, **caractérisé en ce que** le logement comporte au moins un composant pour la réalisation d'une connexion par encliquetage.

9. Rétroviseur extérieur (1) selon la revendication 1, **caractérisé en ce que** le logement comporte au moins un évidement d'encliquetage.

10. Rétroviseur extérieur (1) selon la revendication 1, **caractérisé en ce que** le corps de contact (11) est cylindrique.

11. Rétroviseur extérieur (1) selon la revendication 1, **caractérisé en ce que** le corps de contact (11) est parallélépipédique.

12. Rétroviseur extérieur (1) selon la revendication 1, **caractérisé en ce que** le corps de contact (11) comportant des pattes, en tant que parties d'une connexion par encliquetage.

13. Rétroviseur extérieur (1) selon la revendication 1, **caractérisé en ce que** la au moins une DEL (10) est utilisée comme clignotant.

14. Rétroviseur extérieur (1) selon la revendication 1, **caractérisé en ce que** la au moins une DEL (10) est utilisée comme un indicateur d'avertissement pour un système d'aide au conducteur.
